# EUROPEAN PATENT SPECIFICATION

(11) **EP 2 654 432 B1**
(45) Date of publication and mention of the grant of the patent: **08.02.2017**
(21) Application number: 11802741.6
(22) Date of filing: 22.12.2011
(51) Int. Cl.: A01N 63/00, A01N 63/02, A01N 63/04, A01N 65/00, D06M 16/00

(54) **VOLATILE ORGANIC COMPOUNDS FROM BACTERIAL ANTAGONISTS FOR CONTROLLING MICROBIAL GROWTH**
FLÜCHTIGE ORGANISCHE VERBINDUNGEN AUS BAKTERIELLEN ANTAGONISTEN ZUR KONTROLLE VON MIKROBIELLEM WACHSTUM
COMPOSÉS ORGANIQUES VOLATILS ISSUS D'ANTAGONISTES BACTÉRIENS POUR LUTTER CONTRE LA CROISSANCE BACTÉRIENNE

(30) Priority: 22.12.2010 EP 10196672
(43) Date of publication of application: 30.10.2013
(73) Proprietor: Roombiotic GmbH, 8010 Graz (AT)
(72) Inventor: AICHNER, Martin, A-8020 Graz (AT); OBERAUNER, Lisa, A-8010 Graz (AT); LIEBMINGER, Stefan, A-8041 Graz (AT); FÜRNKRANZ, Michael, A-8010 Graz (AT); KLEIN, Thomas, A-8652 Kindberg (AT); KHINAST, Johannes, A-8010 Graz (AT); BERG, Gabriele, A-8010 Graz (AT)
(74) Representative: Dilg, Haeusler, Schindelmann Patentanwaltsgesellschaft mbH
(86) International application number: PCT/EP2011/073891
(87) International publication number: WO 2012/085255

(56) References cited:
- EP-A2- 2 420 581
- WO-A1-99/34679
- WO-A1-2006/125283
- WO-A2-01/13927
- WO-A2-2004/098291
- WO-A2-2005/009360
- WO-A2-2010/129285
- WO-A2-2011/076912
- US-A1- 2010 086 520
- US-B1- 6 602 500
- AHMAD I ET AL: "Antimicrobial and phothocochemical studies on 45 Indian medicinal plants against multi-drug resistant human pathogens", JOURNAL OF ETHNOPHARMACOLOGY, ELSEVIER SCIENTIFIC PUBLISHERS LTD, IE, vol. 74, no. 2, 1 January 2001 (2001-01-01), pages 113-123, XP002904503, ISSN: 0378-8741, DOI: 10.1016/S0378-8741(00)00335-4
- BACHIR RAHO GHALEM AND BENALI MOHAMED: "Antibacterial activity of leaf essential oils of Eucalyptus globulus and Eucalyptus camaldulensis", AFRICAN JOURNAL OF PHARMACY AND PHARMACOLOGY, ACADEMIC JOURNALS, NG, vol. 2, no. 10, 1 December 2008 (2008-12-01), pages 211-215, XP007920224, ISSN: 1996-0816
- H. J. D. DORMAN ET AL: "Antimicrobial agents from plants: antibacterial activity of plant volatile oils", JOURNAL OF APPLIED MICROBIOLOGY, vol. 88, no. 2, 1 February 2000 (2000-02-01), pages 308-316, XP055018898, ISSN: 1364-5072, DOI: 10.1046/j.1365-2672.2000.00969.x
- POWER E G M: "aldehydes as biocides", PROGRESS IN MEDICINAL CHEMISTRY, ELSEVIER, AMSTERDAM, NL, vol. 34, 1 January 1997 (1997-01-01), pages 149-201, XP009155825, ISSN: 0079-6468
- PREMKUMAR T ET AL: "Antimicrobial study of pyrazine, pyrazole and imidazole carboxylic acids and their hydrazinium salts", WORLD JOURNAL OF MICROBIOLOGY AND BIOTECHNOLOGY, KLUWER ACADEMIC PUBLISHERS, DO, vol. 21, no. 4, 1 June 2005 (2005-06-01), pages 479-480, XP019271561, ISSN: 1573-0972
- BEATTY P H ET AL: "Paenibacillus polymyxa produces fusaricidin-type antifungal antibiotics active against Leptosphaeria maculans, the causative agent of blackleg disease of canola", CANADIAN JOURNAL OF MICROBIOLOGY, NRC RESEARCH PRESS, CA, vol. 48, no. 2, 1 January 2002 (2002-01-01), pages 159-169, XP002993803, ISSN: 0008-4166, DOI: 10.1139/W02-002
- CHAE B ET AL: "Feed for preventing bacterial infections caused by Escherichia coli and Staphylococcus, comprises protein extracted from Solanum tuberosum as active ingredient", WPI / THOMSON,, vol. 2009, no. 28, 22 January 2009 (2009-01-22), XP002589552, & KR 2009 0008599 A (KNU INDUSTRY COOPERATION FOUND [KR]; POTATO VALLEY INC [KR]) 22 January 2009 (2009-01-22)
- MICHAEL FÃ 1/4 RNKRANZ ET AL: "Microbial Diversity Inside Pumpkins: Microhabitat-Specific Communities Display a High Antagonistic Potential Against Phytopathogens", MICROBIAL ECOLOGY, SPRINGER-VERLAG, NE, vol. 63, no. 2, 23 September 2011 (2011-09-23), pages 418-428, XP035013162, ISSN: 1432-184X, DOI: 10.1007/S00248-011-9942-4
- VICENTE PAULO CAMPOS ET AL: "Volatiles produced by interacting microorganisms potentially useful for the control of plant pathogens", CIÊNCIA E AGROTECNOLOGIA, vol. 34, no. 3, 1 January 2010 (2010-01-01), pages 525-535, XP055025274, ISSN: 1413-7054, DOI: 10.1590/S1413-70542010000300001
- SINGHAI P K ET AL: "Biological management of common scab of potato throughspecies and vermicompost", BIOLOGICAL CONTROL, SAN DIEGO, CA, US, vol. 57, no. 2, 18 February 2011 (2011-02-18), pages 150-157, XP028160478, ISSN: 1049-9644, DOI: 10.1016/J.BIOCONTROL.2011.02.008 [retrieved on 2011-02-23]
- HANS C BECK ET AL: "Novel pyrazine metabolites found in polymyxin biosynthesis by Paenibacillus polymyxa", FEMS MICROBIOLOGY LETTERS, vol. 220, no. 1, 1 March 2003 (2003-03-01) , pages 67-73, XP055025316, ISSN: 0378-1097, DOI: 10.1016/S0378-1097(03)00054-5
- G. TUPINAMBÁ ET AL: "Antimicrobial activity of Paenibacillus polymyxa SCE2 against some mycotoxin-producing fungi", JOURNAL OF APPLIED MICROBIOLOGY, vol. 105, no. 4, 1 October 2008 (2008-10-01), pages 1044-1053, XP055025279, ISSN: 1364-5072, DOI: 10.1111/j.1365-2672.2008.03844.x
- WASEEM RAZA ET AL: "Isolation and characterisation of fusaricidin-type compound-producing strain of Paenibacillus polymyxa SQR-21 active against Fusarium oxysporum f.sp. nevium", EUROPEAN JOURNAL OF PLANT PATHOLOGY, KLUWER ACADEMIC PUBLISHERS, DO, vol. 125, no. 3, 23 June 2009 (2009-06-23) , pages 471-483, XP019748031, ISSN: 1573-8469, DOI: 10.1007/S10658-009-9496-1
- SANG GYU KIM ET AL: "Inhibitory Effect of Paenibacillus polymyxa GBR-462 on Phytophthora capsici Causing Phytophthora Blight in Chili Pepper", JOURNAL OF PHYTOPATHOLOGY, vol. 157, no. 6, 1 June 2009 (2009-06-01), pages 329-337, XP055025280, ISSN: 0931-1785, DOI: 10.1111/j.1439-0434.2008.01490.x
- W.M. HAGGAG ET AL: "Colonization of peanut roots by biofilm-forming Paenibacillus polymyxa initiates biocontrol against crown rot disease", JOURNAL OF APPLIED MICROBIOLOGY, vol. 104, no. 4, 1 April 2008 (2008-04-01) , pages 961-969, XP055025284, ISSN: 1364-5072, DOI: 10.1111/j.1365-2672.2007.03611.x
- S. LIEBMINGER ET AL: "A new textile-based approach to assess the antimicrobial activity of volatiles", TEXTILE RESEARCH JOURNAL, vol. 82, no. 5, 1 December 2011 (2011-12-01), pages 484-491, XP055025290, ISSN: 0040-5175, DOI: 10.1177/0040517511429607
- BIN LI ET AL: "Inhibitory activity of Paenibacillus macerans and Paenibacillus polymyxa against Ralstonia solanacearum", AFRICAN JOURNAL OF MICROBIOLOGY RESEARCH, ACADEMIC JOURNALS, NG, vol. 4, no. 19, 4 October 2010 (2010-10-04), pages 2046-2054, XP007920553, ISSN: 1996-0808
- STERN NORMAN J 1 ET AL: "Paenibacillus polymyxa Purified Bacteriocin To Control Campylobacter jejuni in Chickens", JOURNAL OF FOOD PROTECTION, INTERNATIONAL ASSOCIATION FOR FOOD PROTECTION, US, vol. 68, no. 7, 1 July 2005 (2005-07-01), pages 1450-1453, XP009158661, ISSN: 0362-028X
- DATABASE CA [Online] CHEMICAL ABSTRACTS SERVICE, COLUMBUS, OHIO, US FISCHER, G. ET AL: 'Microbial volatile organic compounds (MVOC) of molds - use as an exposure indicator' Retrieved from STN Database accession no. 2001:233804 & FISCHER, G. ET AL: "Microbial volatile organic compounds (MVOC) of molds - use as an exposure indicator", SCHRIFTENREIHE DES VEREINS FUER WASSER-, BODEN- UND LUFTHYGIENE , 104(STAND VON WISSENSCHAFT, FORSCHUNG UND TECHNIK ZU SIEDLUNGSHYGIENISCHEN ASPEKTEN DER ABFALLENTSORGUNG UND VERWERTUNG), 183-192 CODEN: SVWLAE; ISSN: 0300-8665, 1999,
- DATABASE CA [Online] CHEMICAL ABSTRACTS SERVICE, COLUMBUS, OHIO, US SEO, HYE MIN ET AL: 'Volatile flavor compounds of freeze dried garlic and garlic roasted with oils' Retrieved from STN Database accession no. 2007:517682 & SEO, HYE MIN ET AL: "Volatile flavor compounds of freeze dried garlic and garlic roasted with oils", HAN'GUK SIKP'UM YONGYANG KWAHAK HOECHI , 36(3), 332-341 CODEN: HSYHFB; ISSN: 1226-3311, 2007, DOI: 10.3746/JKFN.2007.36.3.332 10.3746/JKFN.2007.36.3.332
- DATABASE CA [Online] CHEMICAL ABSTRACTS SERVICE, COLUMBUS, OHIO, US KLOCKER, JOHANNA ET AL: 'Bayesian Neural Networks for Aroma Classification' Retrieved from STN Database accession no. 2002:768781 & KLOCKER, JOHANNA ET AL: "Bayesian Neural Networks for Aroma Classification", JOURNAL OF CHEMICAL INFORMATION AND COMPUTER SCIENCES , 42(6), 1443-1449 CODEN: JCISD8; ISSN: 0095-2338, 2002, DOI: 10.1021/CI0202640 10.1021/CI0202640
- DATABASE CA [Online] CHEMICAL ABSTRACTS SERVICE, COLUMBUS, OHIO, US DICKSCHAT, JEROEN S. ET AL: 'Pyrazine Biosynthesis in Corynebacterium glutamicum' Retrieved from STN Database accession no. 2010:555169 & DICKSCHAT, JEROEN S. ET AL: "Pyrazine Biosynthesis in Corynebacterium glutamicum", EUROPEAN JOURNAL OF ORGANIC CHEMISTRY , (14), 2687-2695, S2687/1-S2687/11 CODEN: EJOCFK; ISSN: 1434-193X, 2010, DOI: 10.1002/EJOC.201000155 10.1002/EJOC.201000155
- DATABASE CA [Online] CHEMICAL ABSTRACTS SERVICE, COLUMBUS, OHIO, US HWANG, HUI-ING ET AL: 'Relative Reactivities of Amino Acids in Pyrazine Formation' Retrieved from STN Database accession no. 1995:297845 & HWANG, HUI-ING ET AL: "Relative Reactivities of Amino Acids in Pyrazine Formation", JOURNAL OF AGRICULTURAL AND FOOD CHEMISTRY , 43(1), 179-84 CODEN: JAFCAU; ISSN: 0021-8561, 1995, DOI: 10.1021/JF00049A033 10.1021/JF00049A033
- PAULIN AZOKPOTA ET AL: "Diversity of volatile compounds of afitin, iru and sonru, three fermented food condiments from Benin", WORLD JOURNAL OF MICROBIOLOGY AND BIOTECHNOLOGY, KLUWER ACADEMIC PUBLISHERS, DO, vol. 24, no. 6, 1 September 2007 (2007-09-01), pages 879-885, XP019616966, ISSN: 1573-0972

## Description

### FIELD OF THE INVENTION

The present invention relates to non-therapeutic methods for controlling microbial growth on a surface to be treated. More particularly, the invention is directed to non-therapeutic methods for the microbial decontamination by employing one or more volatile organic compounds produced by plant-associated microorganisms.

### BACKGROUND

The removal of microbial contaminants from environments or any materials is of utmost importance in many applications. The presence of such microbial contaminants may have detrimental effects, for example if these contaminants are pathogenic, and thus cause any medical conditions in organisms being in contact with them. Additionally or alternatively, microbial contaminants may also interfere with the production process of various goods, e.g., goods produced in a clean room.

Clean room environments are of immense value in the fabrication and assembly of many industrial products, including *inter alia* electronics, semiconductors, spacecraft components, medical devices, pharmaceuticals, and cosmetics. The low density of environmental pollutants such as dust, aerosolized particulates, airborne microorganisms, and chemical vapors within these clean room facilities reduces the amount of both inorganic and organic (i.e. biological) contaminations on and within the products manufactured.

The maintenance of a clean environment and the prevention (or at least reduction) of further contamination is essential for the production process of the above-referenced goods. For example, in the pharmaceutical industry an aseptic environment (at least during some production steps) is inevitable for the manufacture of medicaments (cf., e.g., Schicht, H.H. (1998) Cleanrooms Int. 2, 17-28).

Clean room technology thus aims at the development of various concepts for avoiding contamination. For example, equipment inside the clean room such as furniture is designed to generate minimal air contamination. Air entering a clean room from outside is filtered to exclude dust, and the air inside is constantly re-circulated through high efficiency particulate air filters in order to remove internally generated contaminants. In addition, clean rooms may also be kept at a positive pressure so that in case of any leaks, air leaks out of the chamber instead of unfiltered air coming in.

One critical source of contamination is the transfer of materials or personnel to or from clean rooms. However, some equipment, typically made of materials having a low porosity, such as manufacturing devices (e.g. pipetting robots) or laboratory supplies (e.g., tubes, dishes) can be decontaminated (or sterilized) fairly easy by means of, e.g., autoclaving (that is, heat treatment) or gamma ray treatment.

Much more problematic is the transfer of people to, from or between different clean rooms. Personnel enter and leave clean rooms through airlocks (sometimes including an air shower stage), and wear protective clothing such as masks, gloves, shoe covers, and coveralls. However, whenever staff members move between clean rooms of different classes (e.g., for monitoring different production (and/or packaging) steps in parallel or to transport an intermediate product obtained in a given production step in another clean room where the next step takes place) have to change their complete protective clean room clothing in order to avoid microbial contaminations. This procedure is not only uncomfortable for the staff concerned but also time consuming (30 min per change of clothing). Since, in average, there are 3-4 coating cycles per day, the total expenditure of time can be calculated to be 2.5 hours per day.

In addition, after each coating cycle the clean room clothing has to be disposed (in case of single use-clothing) or washed and sterilized prior to re-use. Employing single use-clothing is clearly an expensive option. Re-using the clean room clothing, on the other hand, requires considerable effort. Moreover, sterilization proceedings by heat treatment or radiation affect, at least in the medium-term, the quality and performance characteristics of the clothing material such that the re-use of such protective clothing is also limited to a clear number of cycles (cf., e.g., Gail, L. and Hortig, H.P. (2004) Reinraumtechnik, 2nd ed., Springer Verlag, Berlin, p. 319-354).

Hence, there is a continuing need for methods and compositions for the decontamination of clean room clothing that would not necessarily require the change of said clothing during each and every entry in or leave of clean rooms.

Furthermore, in clinical settings such as hospitals the decontamination of surfaces is additionally hampered by the often high concentration of multidrug-resistant pathogenic microorganisms present in an environment, that is, microbial contaminants that have acquired resistance against various drugs or other chemical compounds (in particular antibiotics), which would otherwise exert a growth inhibitory and/or killing anti-microbial effect. Multidrug-resistant organisms frequently result in nosocomial (i.e. hospital-acquired) infections that cause or contribute to 100.000 deaths each year in the USA and 50.000 deaths each year in Europe.

Accordingly, there is also a need for antimicrobial agents having a high potency and a broad range activity that enables their use for the removal even of multidrug-resistant pathogens.

WO 2011/076912 A2 discloses methods and compositions for controlling microbial growth on clean room equipment, preferably on clean room clothing. The method comprises contacting the clean room equipment to be treated with one or more antimicrobial agents; and incubating the clean room equipment for a pre-selected period of time, wherein the one or more antimicrobial agents are of organic origin.

WO 01/13927 A2 discloses compositions derived from an isolated *Bacillus* species, spores, or an extracellular product of *Bacillus coagulans* comprising a supernatant or filtrate of a culture of said *Bacillus coagulans* strain, suitable for topical application to the skin or mucosal membranes of a mammal, which are utilized to inhibit the growth of bacterium, yeast, fungi, virus, and combinations thereof.

WO 2004/098291 A2 discloses a method of preventing or inhibiting fungal growth on or in a manufactured material, the method comprising the addition of at least one bacterial cell and/or at least one spore thereof to the material during the manufacture of the material, and/or the application of at least one bacterial cell and/or at least one spore thereof to one or more surface of the material, wherein the at least one bacterial cell has antifungal activity and is capable of forming spores.

WO 2005/009360 A2 discloses pesticidally effective compositions related to an endophytic fungi named *Muscodor* as well as various synthetic pesticidal mixtures of volatile organic compounds isolatable from *Muscodor* grown on various substrates.

US 2010/0086520 A1 discloses compositions and kits comprising: (i) microorganisms which are able to stimulate the growth of microorganisms of the resident skin microbial flora and which do not stimulate the growth of microorganisms of the transient pathogenic micro flora and (ii) microorganisms which are able to inhibit the growth of one or more microorganisms of the transient pathogenic skin micro flora and which do not inhibit the growth of microorganisms of the healthy normal resident skin micro flora, in order to protect the skin against pathogenic microorganisms and to treat skin diseases.

WO 2006/125283 A1 discloses a method for keeping a surface, object and/or installation free from pathogens, wherein non-pathogenic bacteria strains are applied to the surface or similar concerned.

WO 2010/129285 A2 discloses naturally-derived antimicrobial compositions comprising acid components or ester components isolatable from a volatile by-product of an isolated culture of *Muscodor crispans.*

WO 99/34679 discloses a procedure for fighting salmonella in food industry premises and processes, in which procedure production and/or processing spaces and/or production and/or processing equipment are treated with a lactic acid bacterial preparation having an inhibiting effect on the growth of salmonella and/or corresponding substantially dry production and/or processing spaces and/or production and/or processing equipment are treated with a *Pseudomonas* bacterial preparation having an inhibiting effect on the growth of salmonella.

EP 2 420 581 A2 discloses a biofungicide composition derived from a biologically pure culture of a Chilean bacterial isolate obtained from the skin of grapes, corresponding to *Serratia plymuthica* CCGG2742, to be used as an environmentally friendly biological control agent against fungal diseases of vegetables, in particular fruits susceptible to the infection of *Botrytis cinerea,* efficiently preventing the germination of conidia and the proliferation of mycelia of said phytopathogenic fungus, furthermore protecting the plant's leaves and fruits from the infection by the same fungus, and having the potential of being used in the biological control of other phytopathogenic fungus and microorganisms.

Beatty et al., Can. J. Microbiol. 48 (2002) 159-169 describe that *Paenibacillus polymyxa* produces fusaricidin-type fungal antibiotics active against *Leptosphaeria maculans,* the causative agent of blackleg disease of canola.

KR 2009-0008599 A discloses a feed composition for replacing an antibiotic, and a method for preparing purified potato protein to improve the digestion and to lower the killing rate. The feed composition for replacing an antibiotic comprises *Solanum tuberosum* L cv. Gogu Valley or the potato protein extracted from *Solanum tuberosum* L cv. Gogu Valley as an active ingredient.

US 6,602,500 B1 describes a *Paenibacillus polymyxa* strain for biocontrol of bacteria and fungi.

Fürnkranz et al., Microb Ecol 63 (2012) 418-428 describe the microbial diversity inside pumpkins and in particular microhabitat-specific communities displaying a high antagonistic potential against phytopathogens.

Campos et al., Ciênc. Agrotec. Lavras 34(3) (2010), 525-535 disclose volatiles produced by interacting microorganisms potentially useful for the control of plant pathogens.

Singhai et al., Biological Control 57 (2011) 150-157 disclose the biological management of common scab of potato through *Pseudomonas* species and vermicompost.

Beck et al., FEMS Microbiology Letters 220 (2003) 67-73 describe novel pyrazine metabolites found in polymyxin biosynthesis by *Paenibacillus polymyxa.*

Tupinambá et al., Journal of Applied Microbiology 105 (2008) 1044-1053 describe an antimicrobial activity of *Paenibacillus polymyxa* SCE2 against some mycotoxin-producing fungi.

Raza et al.. Eur J Plant Pathol 125 (2009) 471-483 describe the isolation and characterization of a fusaricidin-type compound-producing strain of *Paenibacillus polymyxa* SQR-21 active against *Fusarium oxysporum* f.sp. *nevium.*

Kim et al., J Phytopathol 157 (2009) 329-337 describe an inhibitory effect of *Paenibacillus polymyxa* GBR-462 on *Phytophthora capsici* causing Phytophthora blight in chili pepper.

Haggag et al., Journal of Applied Microbiology 104 (2008) 961-969 describe that the colonization of peanut roots by biofilm-forming *Paenibacillus polymyxa* initiates biocontrol against crown rot disease.

Liebminger et al., Textile Reasearch Journal 82(5) (2011) 484-491 describe a new textile-based approach to assess the antimicrobial activity of volatiles.

Li et al., African Journal of Microbiology Research 4(19) (2010) 2048-2054 describe an inhibitory activity of *Paenibacillus macerans* and *Paenibacillus polymyxa* against *Ralstonia solanacearum.*

Stern et al., Journal of Food Protection 68(7) (2005) 1450-1453 describe *Paenibacillus polymyxa* purified bacteriocin to control *Campylobacterjejuni* in chickens.

Despite these efforts and findings, there still remains a need for non-therapeutic methods for controlling microbial growth on a surface to be treated, thus enabling a reliable and efficient treatment even of contaminations caused by multidrug-resistant pathogens, particularly without the risk that the contaminants acquire resistance against the antimicrobial agents employed, as well as of contaminations caused by microorganisms specifically adapted to an extreme environment, such as extremo-tolerant microorganism being adapted to clean room settings.

Accordingly, it is an object of the present invention to provide such methods.

### SUMMARY OF THE INVENTION

In a first aspect, the present invention relates to a non-therapeutic method for controlling microbial growth on a surface to be treated, the method comprising: contacting the surface with one or more antimicrobial agents; and incubating the surface for a pre-selected period of time, wherein the one or more antimicrobial agents are volatile organic compounds produced by plant-associated microorganism, selected from pyrazines, wherein the one or more pyrazines are selected from the group consisting of 2-methyl-5-(1-methylethyl)-pyrazine, 2,3,5-trimethyl-6-propyl-pyrazine, 2,3-dimethyl-6-propyl-pyrazine, 2,3-dimethyl-5-(1-methylpropyl)-pyrazine, 2,3-dimethyl-5-(2-methylpropyl)-pyrazine, and 2-(2-methylpropyl)-3-(1-methylethyl)-pyrazine.

Particularly preferably, the one or more pyrazines are selected from the group consisting of 2-methyl-5-(1-methylethyl)-pyrazine, 2,3-dimethyl-5-(2-methylpropyl)-pyrazine, and 2-(2-methylpropyl)-3-(1-methylethyl)-pyrazine, in particular from the group consisting of 2,3-dimethyl-5-(2-methylpropyl)-pyrazine, and 2-(2-methylpropyl)-3-(1-methylethyl)-pyrazine.

In particular embodiments, the surface to be treated is not part of clean room equipment.

In other particular embodiments, the surface to be treated is located in a clinical setting.

In preferred embodiments, the method is for controlling microbial growth of one or more human pathogens, in particular multidrug-resistant human pathogens. In further specific embodiments, the one or more human pathogens cause nosocomial or community-acquired infections.

Particularly preferably, the one or more human pathogens are selected from the group consisting of *Staphylococcus aureus, Staphylococcus epidermidis, Pseudomonas aeruginosa, Haemophilus influenzae, Stenotrophomonas maltophilia, Acinetobacter baumanii, Clostridium difficile, Mycobacterium tuberculosis,* and *Legionella pneumophila.*

### DESCRIPTION OF THE DRAWINGS

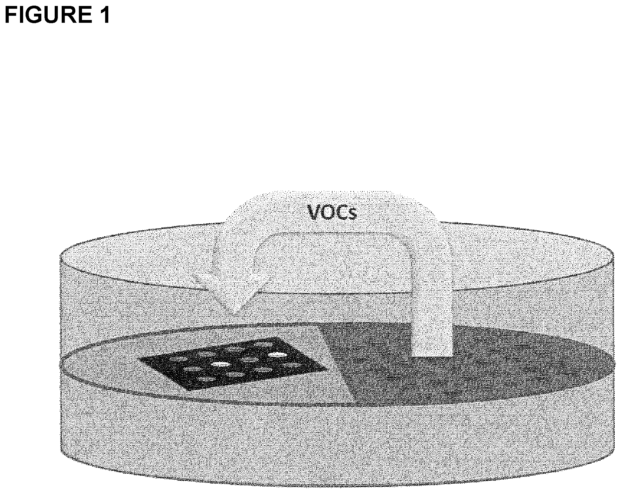

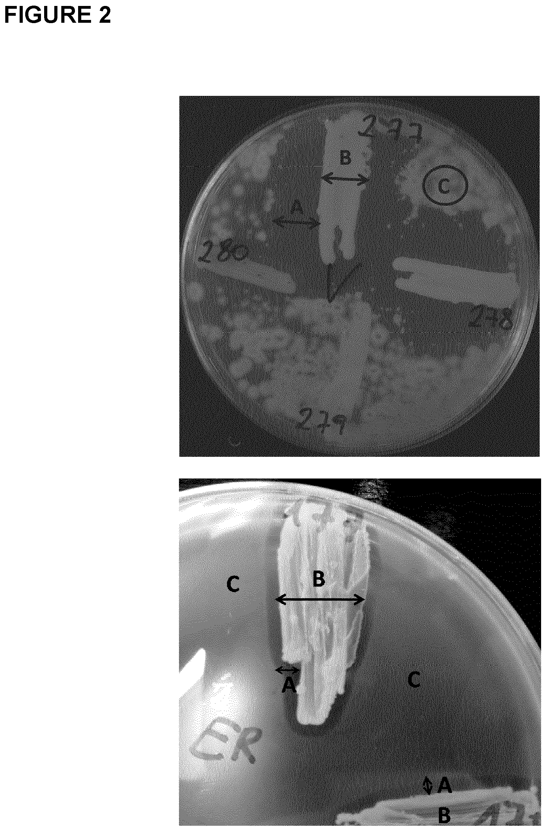

**FIGURE 1****: Schematic illustration of the mode of action of volatile organic compounds.**
   The volatile organic compounds (VOCs) are produced from plant-associated microorganisms (i.e. "antagonistic bacteria") grown on an agar plate (right part). The VOCs are dispersed in the air and exert their growth inhibitory effect on pathogenic microorganisms (left part of the agar plate).
**FIGURE 2****: Analysis of the efficacy of antimicrobial agents on microbial growth.**
   The upper panel depicts an exemplary analysis of the efficacy of antimicrobial agents against *Verticillium dahliae.* The method (dual culture assay) was performed on Waksman agar as described in Berg, G. (1996) J. Plant Dis. Protect. 103, 20-30. The lower panel shows an exemplary *in vitro* assay of the efficacy of antimicrobial agents against *Erwinia carotovora.*
   The assay was modified from Rasche, F. et al (2006) J. Appl. Ecology 43, 555-566. Abbreviations: A, zone of growth inhibition; B, zone of endophytic bacteria.

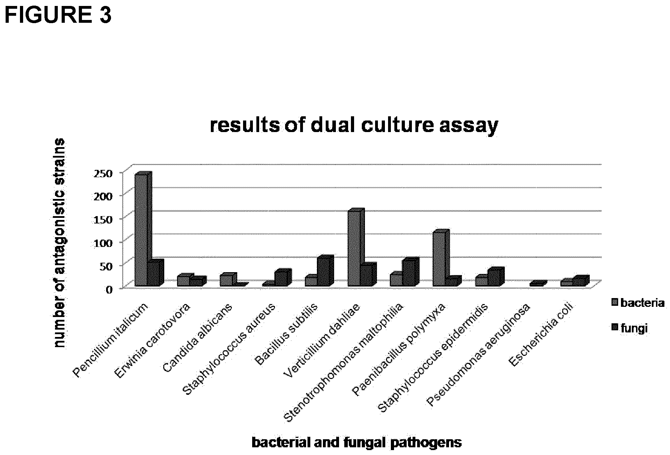

**FIGURE 3****: Analysis of the efficacy of antimicrobial agents on microbial growth.**
   The bar chart shows the total number of antagonists identified against eleven pathogenic fungi and bacteria known to be inhabiting clean rooms. The analysis was performed using the assay described in Fig. 2, upper panel.

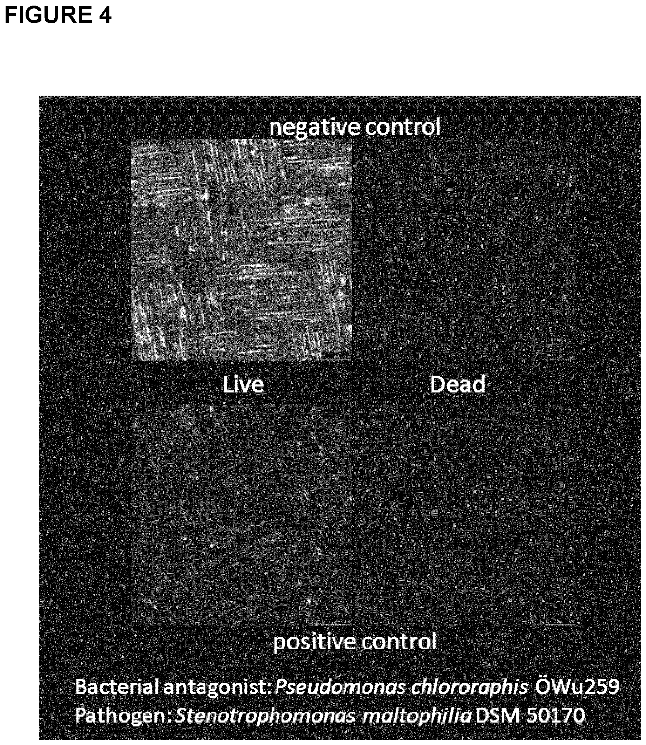

**FIGURE 4****: Modified textile-based assay for the evaluation of antibacterial activity of volatile organic compounds.**
   Selected plant-associated bacteria were tested for their ability to produce volatile organic compounds (VOCs) which inhibit the growth of clean room-inhabiting microorganisms, and thus represent antimicrobial agonists as defined herein. Based on a conventional dual culture assay cells were co-incubated for a defined period of time. Bacteria with antagonistic potential were plated on solid media on one half of the dual culture plate. The selected pathogen was incubated on a piece of clean room textile (1 x 1 cm) on the other half of the culture plate. Co-incubation was performed for 24 hours. After incubation the textile piece was brought to a staining solution. Cells were stained with a bacterial viability kit based on fluorescent dyes which allow live/dead staining. Bacterial cells with intact membranes were stained by fluorescence green, while dead bacteria were stained with fluorescence red. Detection was performed by means of fluorescence microscopy.

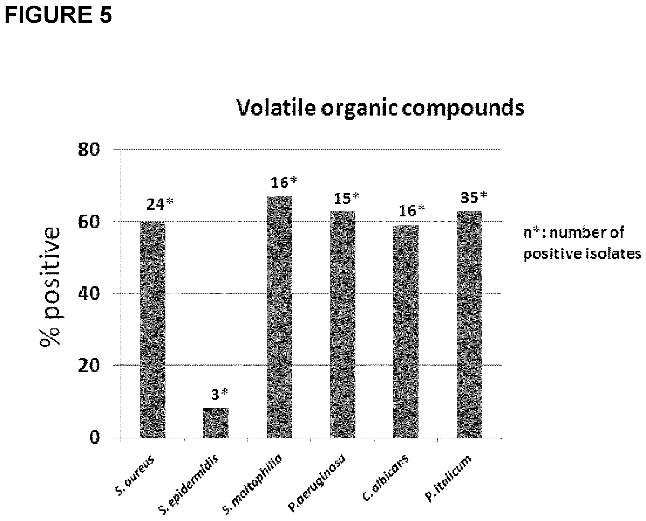

**FIGURE 5****: Analysis of the efficacy of volatile organic compounds on microbial growth.**
   The bar chart shows the percentage of antagonists producing volatile organic compounds with antimicrobial impact against six pathogenic bacteria and fungi known to be inhabiting clean rooms. The analysis was performed using the assay described in Fig. 4.

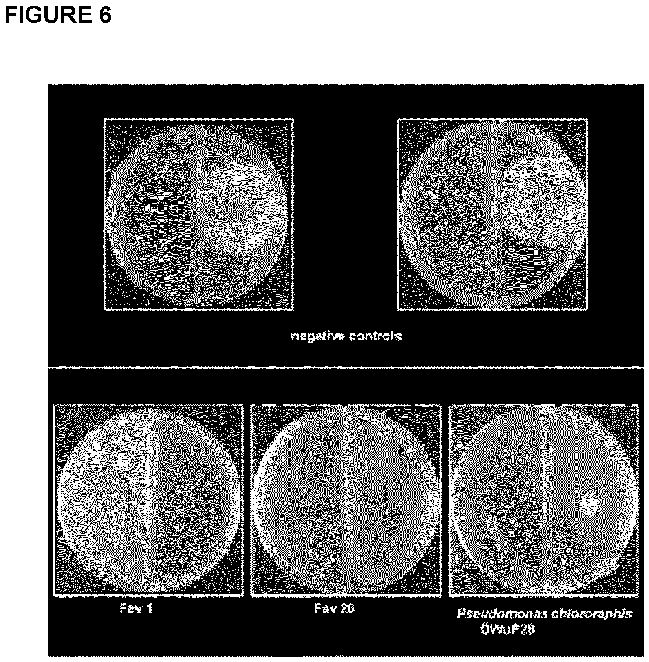

**FIGURE 6****: Effect of volatile organic compounds produced by *Pseudomonas chlororaphis* on growth inhibition of *Penicillium italicum.***
   Dual culture testing (cf. Fig. 2) confirmed the production by antagonistic bacteria of highly efficient antimicrobial substances which spread via air space and inhibit the growth of tested pathogens. *Pseudomonas chlororaphis* produced volatile organic compounds which strongly reduced the growth of *Penicillium italicum* as demonstrated in a dual culture assay. Cell cultures of both, the antagonist and the pathogen, were co-incubated on solid nutrient agar. After 24 hours of incubation a degeneration of the growth was observed as compared to a negative control.

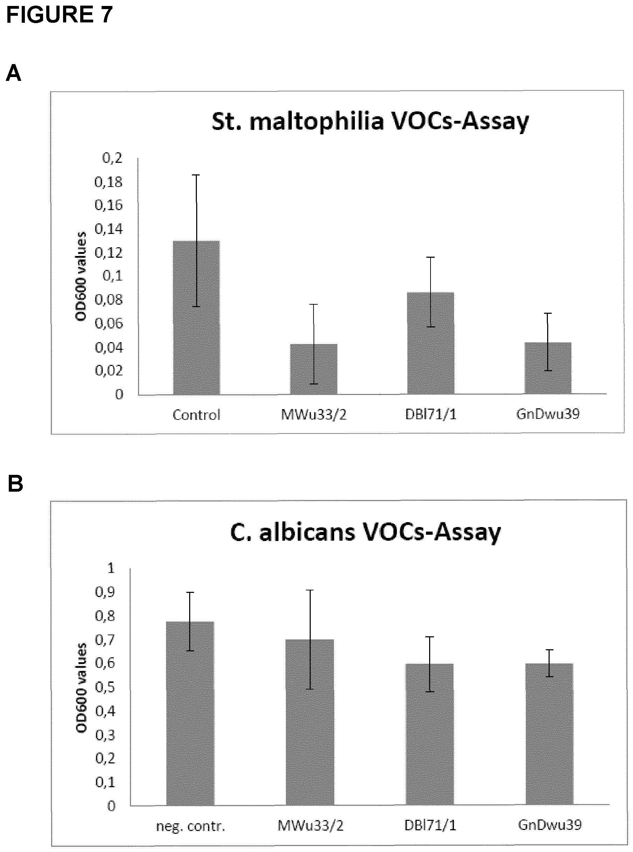

**FIGURE 7****: Efficacy of volatile organic compounds (VOCs) produced by *Paenibacillus polymyxa* on pathogen growth.**
   *Paenibacillus polymyxa* strains MWu33/2, DBI71/1 and GnDWu39 (together with a control) were grown on 1 ml 15% LB-agar, supplemented with 0.5 g/l dextrose, in a well of a 12-well plate and incubated at 37°C for 20-24 hours. A pathogen strain - *Stenotrophomonas maltophilia* **(A)** or *Candida albicans* (**B**) - was grown in a liquid culture to a density of OD₆₀₀ = 0.4-0.7. Then, 5 µl of this suspension were transferred into each well of a second 12-well plate, filled with 1 ml 15% Caso agar. The two 12-well plates were clamped together with a perforated (3 holes per well) silicone foil in-between. After a second incubation period of 44-48 hours the wells with Caso agar were analyzed for growth inhibition. Data are expressed as mean ± SEM of three independent experiments.

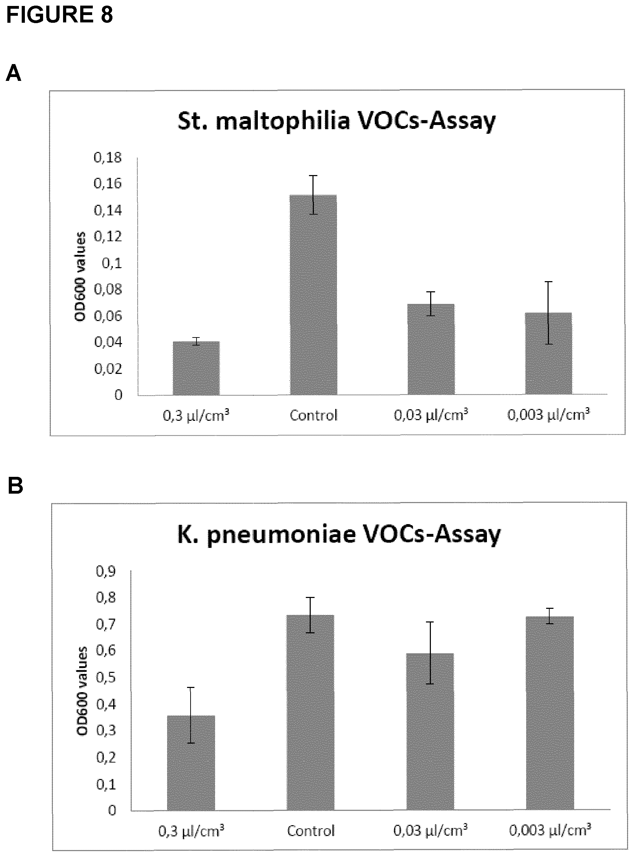

**FIGURE 8****: Efficacy of pyrazine compounds on pathogen growth.**
   The assay was principally performed as described in Fig. 7 with the exception that a synthetic pyrazine, 2,3-dimethyl-5-(1-methylpropyl)-pyrazine (previously identified as VOC produced by *Paenobacillus polymyxa*) was used. 5 µl of different pyrazine dilutions (i.e. 0.3 µl/cm³, 0.03 µl/cm³, and 0.003 µl/cm³) were added to each well of a 12-well plate, filled with 1 ml 15% LB-agar, supplemented with 0.5 g/l dextrose. A pathogen strain - *Stenotrophomonas maltophilia* **(A)** or *Klebsiella pneumoniae* (**B**) - was grown in a liquid culture to a density of OD₆₀₀ = 0.4-0.7. Then, 5 µl of this suspension were transferred into each well of a second 12-well plate, filled with 1 ml 15% Caso agar. The two 12-well plates were clamped together with a perforated (3 holes per well) silicone foil in-between. After an incubation period of 48 hours the wells with Caso agar were analyzed for growth inhibition. Data are expressed as mean ± SEM of three independent experiments.

### DETAILED DESCRIPTION OF THE INVENTION

The present invention is based on the unexpected finding that volatile organic compounds (VOCs) produced by plant-associated microorganisms represent highly potent, broad range antimicrobial agents that can be successfully used for (biologically) controlling microbial growth on a given surface. This, in turn, enables a reliably and efficient decontamination of such surfaces, in particular the inhibition and/or killing of human pathogens, without the risk that the contaminants acquire resistance against the antimicrobial agents employed. The VOCs defined herein may be used *inter alia* in a clinical environment to confine nosocomial infections or for combating extremo-tolerant microorganisms on clean room equipment, and particularly on clean room clothing, thus facilitating clean room operations by avoiding the otherwise necessary change of the clothing at each entry in or leave of a clean room. Typically, the concentration of such VOCs. used for the treatment of a given surface, due to its volatile state, cannot be as high as for non-volatile compounds in order to avoid adverse side effects for the given environment.

The present invention will be described in the following with respect to particular embodiments and with reference to certain drawings but the invention is to be understood as not limited thereto but only by the appended claims. The drawings described are only schematic and are to be considered non-limiting.

Where the term "comprising" is used in the present description and claims, it does not exclude other elements or steps. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Where an indefinite or definite article is used when referring to a singular noun e.g. "a", "an" or "the", this includes a plural of that noun unless specifically stated otherwise.

Furthermore, the terms first, second, third, and (a), (b), (c) in the description and in the claims, are used for distinguishing between similar elements and not necessarily for describing a sequential or chronological order.

In a first aspect, the present invention relates to a non-therapeutic method for controlling microbial growth on a surface to be treated, comprising:
(a) contacting the surface with one or more antimicrobial agents; and
(b) incubating the surface for a pre-selected period of time,
wherein the one or more antimicrobial agents are volatile organic compounds produced by plant-associated microorganisms, selected from pyrazines, wherein the one or more pyrazines are selected from the group consisting of 2-methyl-5-(1-methylethyl)-pyrazine, 2,3,5-trimethyl-6-propyl-pyrazine, 2,3-dimethyl-6-propyl-pyrazine, 2,3-dimethyl-5-(1-methylpropyl)-pyrazine, 2,3-dimethyl-5-(2-methylpropyl)-pyrazine, and 2-(2-methylpropyl)-3-(1-methylethyl)-pyrazine.

The term "controlling microbial growth", as used herein, denotes any activity for completely inhibiting or at least reducing the growth of microorganisms such as bacteria, archaea, yeasts, fungi, and viruses, in a given environment. In particular, the term relates to biologically controlling microbial growth of said microorganisms, that is, by employing biological means as "growth inhibitors or growth reducing agents." The term "inhibiting", as used herein, is to be understood as not only to include the prevention of further growth of but also to killing of any given microorganisms. The term "reducing", as used herein, denotes any decrease in an microorganism's growth (or growth rate), for example, a decrease of at least 5%, 10%, 15%, 20%, 25%, 30%, 40%, 50%, 60%, 70%, 80%, 85%, 90% or 95% as compared to control conditions (i.e. in the absence of antimicrobial agents according to the present invention).

The term "surface to be treated", as used herein, denotes any surface that can be colonized by microbial organisms (i.e. contaminants) and to which the one or more antimicrobial agents of the present invention can be applied. The term includes surfaces made of various materials (e.g., crystalline and amorphous solids, gels, foams, and liquids). The surface may have any properties with respect to rigidity, flexibility, and porosity. In some embodiments, at least two (or more) surfaces are concomitantly treated with the antimicrobial agents.

In specific embodiments, the surface to be treated is part of clean room equipment. The term "clean room equipment", as used herein, refers to any goods that are required for a production process in a clean room environment including *inter alia* clean rooms as such, furniture, any types of devices or apparatuses (e.g., pipettes, robots, centrifuges, work benches, and computer systems), laboratory supplies (e.g., tubes, culture dishes, pipette tips, pens, paper, notebooks, and packaging containers), and clean room clothing.

The term "clean room clothing", as used herein, refers to clean room clothing, that is, the protective clothing put on before entering a clean room. Within the present invention, the term "clean room clothing" denotes any type of garment such as, e.g., gloves, face masks, surgical caps, head covers, hairnets, full cover hoods, socks, shoe covers, undergarments, coveralls, jackets, pants, and coats. The design of such protective clothing including materials of fabrication as well as functional properties is well known in the art. In a specific embodiment, the clean room clothing used is provided with one or more antimicrobial agents of inorganic origin, for example gold and/or silver fibers incorporated in the fabrication materials.

In particular embodiments, the surface to be treated is not part of clean room equipment.

In further specific embodiments, the surface to be treated is located in a clinical setting, for example in a hospital, a medical practice or a clinical laboratory. Surfaces to be treated in a clinical setting include *inter alia* walls, floors and/or ceilings of rooms (e.g., of operating rooms), furniture (e.g., bedsteads, therapy tables), mattresses and bedding (e.g., blankets, pillows), laundry (e.g., linen, surgical clothing/scrubs, towels), any types of devices or apparatuses including surgical and laboratory equipment (e.g., scissors, forceps, pipettes, robots, centrifuges, work benches, and computer systems), consumable supplies including single-use materials (e.g., injection needles, bandages, band-aid, tubes, culture dishes, pipette tips, pens, paper, notebooks, and packaging containers) as well as corresponding waste.

The term "antimicrobial agent", as used herein, refers to any compound or means having an inhibitory (or antagonistic) effect on the growth of microorganisms, that is, agents that are capable of at least reducing the growth rate (e.g., bacteriostatic agents with respect to controlling the growth of bacteria) as well as agents that cause toxic effects (e.g., bactericide agents killing bacteria.

The antimicrobial agents of the present invention are volatile organic compounds (VOCs) produced by plant-associated microorganisms. The term "volatile organic compounds", as used herein, refers to any organic (i.e. carbon-based) chemical compounds that have high enough vapor pressures under normal conditions to significantly vaporize and to enter the atmosphere. Accordingly, as used herein, it is not necessarily required that a particular VOC according to the present invention is fully vaporized under the environmental conditions employed and/or is only present in gaseous (volatile) form. Rather, at least part of a VOC according to the present invention may also be present in another aggregate state, for example in liquid form.

The term "normal conditions", as used herein, particularly refers to ambient temperature of up to 42°C or up to 40°C, and preferably of up to 38°C. The ambient temperature may also be in the range between 18°C and 37°C or in the range between 20°C and 35°C.

The one or more volatile organic compounds are selected from pyrazines. Pyrazines are heterocyclic aromatic compounds having a 1,4-diaza-benzene backbone. Many common pyrazine compounds are fluid at room temperature but nevertheless at least a fraction can also be detected in the gaseous phase. Numerous pyrazine compounds are well known in the art and commercially available from different manufacturers.

The one or more pyrazines are selected from the group consisting of 2-methyl-5-(1-methylethyl)-pyrazine, 2,3,5-trimethyl-6-propyl-pyrazine, 2,3-dimethyl-6-propyl-pyrazine, 2,3-dimethyl-5-(1-methylpropyl)-pyrazine, 2,3-dimethyl-5-(2-methylpropyl)-pyrazine, and 2-(2-methylpropyl)-3-(1-methylethyl)-pyrazine, that is, the selection may comprise any one, any two, any three, any four, any five or all six species of this group.

Typically, the volatile organic compounds employed in the present invention are naturally occurring compounds produced by (and enriched or isolated from) plant-associated microorganisms. In specific embodiments, however, synthetically produced (i.e. chemically synthesized) VOCs may be used as well provided said synthetically produced VOCs are identical to their counterparts produced by plant-associated microorganisms. In further embodiments, a combination of one or more naturally occurring VOCs and one or more synthetically produced VOCs is used.

The term "plant-associated microorganisms", as used herein, relates to any microorganisms that may be associated with plants including *inter alia* bacteria, archaea, yeasts, fungi, and viruses. The term "associated with", as used herein, is to be interpreted in its broadest sense including *inter alia* "located on", "attached to", and "living in symbiosis with". Plant-associated microorganisms producing VOCs are herein also referred to as "antagonistic microorganisms" or "VOC-producing microorganisms".

The term "one or more" (antimicrobial agents, that is, volatile organic compounds), as used herein, denotes that the method of the invention may be performed with a single microbial agent or with at least two different types (i.e. species) of microbial agents, wherein the at least two different types may belong to the same class of chemical compounds. The term "one or more" VOCs relates to one or more (any two, any three, any four, any five or all six) pyrazines being selected from the group consisting of 2-methyl-5-(1-methylethyl)-pyrazine, 2,3,5-trimethyl-6-propyl-pyrazine, 2,3-dimethyl-6-propyl-pyrazine, 2,3-dimethyl-5-(1-methylpropyl)-pyrazine, 2,3-dimethyl-5-(2-methylpropyl)-pyrazine, and 2-(2-methylpropyl)-3-(1-methylethyl)-pyrazine.

The choice of (a) particular volatile organic compounds to be employed as (an) antimicrobial agent(s) for a given scenario may depend *inter alia* on the extent of microbial growth (i.e. the quantity) present on or supposed to be present on the surface to be treated as well as on the nature (i.e. the quality) of the contaminants present (for example, the presence of pathogenic contaminants and/or the presence of multidrug-resistant microbial organisms). The skilled person is also well aware how to select one or more such antimicrobial agents for a given scenario. In some embodiments, the method of the present invention thus further comprises determining and/or monitoring qualitatively and/or quantitatively the microorganisms colonizing the surface to be treated. Numerous methods for achieving this goal are also well known in the art.

Within the present invention, the term "contacting" denotes any mode of bringing spatially together the surface to be treated with the one or more volatile organic compounds (i.e. the antimicrobial agents).

In specific embodiments, the contacting step comprises a physical contacting method. Preferably, the physical contacting method is selected from the group consisting of spraying and gassing of the surface to be treated with the one or more antimicrobial agents (present, e.g., in gaseous form, as an aerosol, a solution or a foam), for example by means of one or more spray heads, nozzles, pump-injectors or spray valves located in an airlock adjacent a clean room).

The choice of a particular contacting method may depend *inter alia* on the number, type(s) and amount(s) of the one or more antimicrobial agents to be employed, and the properties of the surface to be treated. The skilled person is also well aware how to select an appropriate approach for a given setting.

In case of clean room clothing, the step of contacting the clothing with the antimicrobial agent(s) may be performed prior to or after having put on the clothing to be treated.

According to the present invention, after having contacted the surface to be treated with one or more antimicrobial agents (i.e. VOCs) said surface is incubated in the presence of the antimicrobial agents for a pre-selected period of time. Typically, the contacting and incubation is performed at an ambient temperature of up to 42°C or up to 40°C, and preferably of up to 38°C. The ambient temperature may also be in the range between 18°C and 37°C or in the range between 20°C and 35°C.

It is apparent that the duration of the incubation step depend *inter alia* on the type(s) and concentration(s) of the one or more antimicrobial agents employed (in other words, the intensity of the treatment performed), the type(s) and number(s) of at least some of microorganisms whose growth is to be controlled (should this information be available), and the size of the surface area to be treated.

The skilled person is well aware how to calculate the time period required for inhibiting the growth of or, preferably, for killing at least a substantial portion of the microbial contaminant(s). Alternatively, reference data retrieved from the scientific literature may be used. In case of clean room clothing, the duration of the incubation period will also depend on whether the method is performed prior to or after having put on the clothing to be treated. Typically, the time period is shorter if the method is performed after having put on the clothing to be treated for the sake of convenience of the personnel concerned. The overall incubation period according to the invention may last, e.g., 5 s, 10 s, 20 s, 30 s, 45 s, 1 min, 2 min, 5 min, 10 min, 20 min, 30 min, 45 min, 1 h, 1.5 h, 2 h, 3 h, 4 h, or 5 h.

In further specific embodiments, the method of the invention is combined with conventional methods for controlling microbial growth such as spraying or gassing (e.g., using hydrogen peroxide) as well as radiation (e.g., UV radiation).

The method according to the present invention is applicable for controlling growth of any microorganisms (i.e. contaminants) colonizing a surface to be treated including pathogenic microorganisms such as human pathogens or plant pathogens. The term "microorganisms", as used herein, denotes any microscopic organism (i.e. organisms too small to be seen by the naked human eye) including both prokaryotic and eukaryotic organism as well as both single cell-organisms and multi-cellular organisms. Examples of microorganisms include *inter alia* bacteria, archaea (archaebacteria), fungi, yeasts, viruses, and protists (e.g., algae, dinoflagellates, amoebae, *Plasmodium spec.,* and *Euglena spec.).*

In specific embodiments, the method of the invention is not for controlling microbial growth of plant pathogens, that is, microorganisms that cause plant diseases.

In specific embodiments, the method according to the invention is for controlling growth of extremo-tolerant microorganisms, that is, microorganisms specifically adapted to rather harsh environmental conditions (e.g., depletion of nutrition factors, and environmental stresses), preferably to the conditions occurring in clean room environments. Preferably, the microorganisms are selected from the group of bacteria, fungi, and yeasts. Numerous such extremo-tolerant microorganisms have been characterized so far (see, for example, La Duc, M.T. et al. (2007) Appl. Environ. Microbiol. 73, 2600-2611; Moissl, C. et al (2007) FEMS Microbiol. Ecol. 61, 509-521).

In further specific embodiments, the method according to the invention is for controlling growth of any one or more clean room associated microorganisms exemplarily selected from the group consisting of *Bacillus spec., Paenibacillus spec., Geobacillus spec., Oceanobacillus spec., Micrococcus spec., Staphylococcus spec., Exiguobacterium spec., Microbacterium spec., Kocuria spec., Pseudomonas spec., Sphingomonas spec., Stenotrophomonas spec., Verticillium spec., Penicillium spec., Candida spec.,* and *Saccharomyces spec..* All these genera are well known in the art (cf., for example, Garrity, G.M. (ed.) Bergey's Manual of Systematic Bacteriology*; supra).* The method may be performed for controlling the growth of any one, any subgroup of any two or more (i.e. any two, any three, any four, any five, and so forth) or all of the 16 microorganisms of the group disclosed herein above.

In preferred embodiments, the method is for controlling microbial growth of one or more human pathogens, that is, microorganisms that cause a disease or medical condition in human beings, such as infections, and immune diseases. Particularly, the method is for controlling microbial growth of one or more multidrug-resistant human pathogens.

The term "multidrug resistant", as used herein, refers to a condition, where a pathogen is resistant to a variety of drugs or chemical compounds having an otherwise growth inhibitory and/or killing activity on said pathogens. Such drugs or chemical compounds include *inter alia* antibiotics and cytotoxic agents. Examples of such multidrug-resistant microorganisms include *inter alia* multidrug-resistant *Mycobacterium tuberculosis,* multidrug-resistant *Staphylococcus aureus* (including methicillin-resistant *Staphylococcus aureus*)*,* and multidrug-resistant *Haemophilus influenzae,* multidrug-resistant *Enterococcus faecium* (including vancomycin-resistant *Enterococcus faecium*), and multidrug-resistant *Pseudomonas aeruginosa.*

In further preferred embodiments, the method of the invention is for controlling growth of one or more human pathogens that cause nosocomial or community-acquired infections. The term "nosocomial infections", as used herein, denotes any infections that are the result of a treatment in a hospital or other clinical setting. Accordingly, this type of infection is also commonly referred to as "hospital-acquired infections". The infection may be caused by any type of microorganisms, that is, they may be of bacterial, viral or fungal origin. Such nosocomial conditions may affect any part of the body including *inter alia* the respiratory tract, the lung, the urinary tract, the gastrointestinal tract, and the bloodstream. In contrast, the term "community-acquired infections", as used herein, denote any infections that are not the result of a treatment in a hospital or other clinical setting.

In particularly preferred embodiments, the one or more human pathogens whose growth is controlled by means of the method according to the present invention are selected from the group consisting of *Staphylococcus aureus, Staphylococcus epidermidis, Pseudomonas aeruginosa, Haemophilus influenzae, Stenotrophomonas maltophilia, Acinetobacter baumanii, Clostridium difficile, Mycobacterium tuberculosis,* and *Legionella pneumophila.* All these organisms are well known in the art (cf., for example, Garrity, G.M. (ed.) Bergey's Manual of Systematic Bacteriology*, supra*).

The invention is further described by the figures and the following examples.

### EXAMPLES

### Example 1: Dual culture assay to prove the antagonistic potential of volatile organic compounds from plant associated microbes.

In this study, endophytic bacteria and fungi, which produce volatile organic compounds (VOCs) and which were isolated from different plants such as *Viscum album,* were tested for their antagonisitic potential against the following pathogens: bacteria: *Staphylococcus aureus (ATCC* 25923), *Staphylococcus epidermidis (ATCC 14990), Stenotrophomonas maltophilia (ep-15), Pseudomonas aeruginosa* (QC *14-38), Escherichia coli (OP 50), Paenibacillus polymyxa (SF1-37), Bacillus subtilis (Bioindikator - EH Sus-10-7), Erwinia carotovora (Eca* 549); fungi: *Verticillium dahliae (V25), Penicillium italicum* (RB 425), and *Candida albicans (yeast).* The analysis was performed using a dual culture assay as described below in Example 2.

Representative results illustrating the antagonistic potential of the VOCs from the endophytic bacteria and fungi are shown in Fig. 3.

### Example 2: Bioassay to prove in vitro inhibition of bacterial and yeast pathogens by volatile organic compounds (Comparative Example).

Endophytic bacteria and endophytic fungi (in total 300 endophytic bacteria and 130 endophytic fungi) were tested for their antagonistic potential against the pathogens described in example 1.

For analysis of the antagonistic potential of the endophytic fungi, a dual culture assay approach was employed, which was modified from Rasche, F. et al (2006), *supra.* In brief, 5 ml of an overnight culture of one test pathogen were mixed with 15 ml of Waksman agar (containing 1.5% agar agar) and poured into a standard Petri dish. After solidification, a 4 mm² plug of each test fungus was placed on the dish. Zones of inhibition were measured after 48h.

The assay of the antagonistic potential of endophytic bacteria was performed in an analogous manner with the exception of using LB agar instead of Waksman agar. The endophytic bacteria were streaked out in broad bands. Zones of inhibition were measured after 24h.

The results illustrating the antagonistic potential of the endophytic bacteria and fungi are shown in Fig. 2, lower panel.

Additionally and/or alternatively, for analysis of the antagonistic potential of the endophytic fungi, a modified dual culture assay approach was employed. In brief, a certain amount of an overnight culture of the selected antagonist was transferred to fresh liquid media and grown till OD600 was between 0.8 and 1.0. 50 µl were plated on nutrient agar. This was also done with the test pathogen. A defined volume of cell culture was applied on a piece of clean room textile (1 x 1 cm). Co-incubation of the antagonist and the test pathogen was done for at least 24 hours. Growth inhibition was monitored by fluorescent dying using a bacterial viability kit.

Representative results illustrating the antagonistic potential of the endophytic bacteria and fungi are shown in Figs. 4 and 5.

### Example 3: Bioassay to prove in vitro inhibition of Verticillium dahlia (Comparative Example).

The test of the antagonistic potential of the endophytic fungi was performed on PDA using a dual culture assay modified from in Berg, G. (1996), *supra.* The plates were inoculated with 200 µl of a hyphal suspension of *Verticillium dahliae.* A 4 mm² plug of the test fungus was placed on the plates. Zones of inhibition were analyzed after 48h.

The test of the antagonistic potential of the endophytic bacteria was performed on Waksman agar (bacterial endophytes). The plates were inoculated with 200µl of a hyphal suspension of *Verticillium dahliae.* The bacteria were streaked out in broad bands. Zones of inhibition were measured after 24h.

The results illustrating the antagonistic potential of the endophytic bacteria and fungi are shown in Fig. 2, upper panel.

### Example 4: Bioassay to prove in vitro inhibition of Penicillium italicum with Pseudomonas chlororaphis (Comparative Example).

The test of the antagonistic potential was performed with the dual culture assay as decribed above. After 24h, the growth inhibition of *Penicillium italicum* was measured. Exemplary results illustrating the antagonistic potential of produced volatile organic compounds produced by isolated antagonists are shown in Fig. 6.

### Example 5: Efficacy of volatile organic compounds (VOCs) produced by Paenibacillus polymyxa on pathogen growth (Comparative Example).

The screening assay for determining the efficacy of the VOCs is based on two multi-well plates (12 well plates, purchased from Greiner Bio-One GmbH, Kremsmunster, Austria). The wells of the first plate were each filled with 1 ml of 15% LB agar, supplemented with 0.5 g/l dextrose. The wells of the second plate each filled with 1 ml of 15% Caso (casein-soy) agar (15 g/l casein peptone, 5 g/l soy peptone, 5 g/l NaCl, pH 7.3).

The wells containing LB-Agar were inoculated with a *Paenibacillus polymyxa* strain by using an inoculating loop (or a sterile tooth pick) by streaking a single antagonist colony put down five times on the agar for each well.

The following strains were used: *Paenibacillus polymyxa* MWu33/2, DBI71/1, and GnDWu39. All strains were isolated from Styrian oilseed pumpkin *(Curcubita pepo* var. *styriaca).* Incubation was done at 37°C for 20-24 hours.

A pathogen strain - *Stenotrophomonas maltophilia* (Fig. 7A) or *Candida albicans* (Fig. 7B) - was grown in a liquid culture to a density of OD₆₀₀ = 0.4-0.7.Then, 5 µl of this suspension were transferred into each well of a second 12-well plate, filled with the Caso agar. Wells without adding a pathogen strain were used as controls.

The two 12-well plates were clamped together with a perforated (3 holes per well) silicone foil in-between (silicone foil, 1 mm thick, holes having a diameter of 0.5 mm). Thereby, it is important that the plates are in close proximity in order to allow the interaction of just one well with another. After a second incubation period of 44-48 hours, the wells with Caso-agar were analyzed for spots showing growth inhibition. All wells without inhibition show milky nontransparent spots, which can be interpreted as growth of the pathogen, while wells with strong inhibition stay clear. Data shown are expressed as mean ± SEM of three independent experiments.

From Fig. 7A it is apparent that the respective VOCs produced by all three *Paenibacillus polymyxa* strains tested significantly inhibited the growth of *Stenotrophomonas maltophilia.* On the other hand, the growth of *Candida albicans* was only affected by these VOCs to a rather small extent, thus indicating a pathogen-specific mechanism (cf. Fig. 7B).

### Example 6: Efficacy of volatile pyrazine compounds on pathogen growth.

The assay was principally performed as described in Example 5 with the exception that instead of a *Paenobacillus polymyxa* strain a synthetic pyrazine compound, 2,3-dimethyl-5-(1-methylpropyl)-pyrazine, was used. The above pyrazine compound was obtained from Sigma Aldrich, Munich, Germany.

5 µl of different pyrazine dilutions (i.e. 0.3 µl/cm³, 0.03 µl/cm³, and 0.003 µl/cm³) were added to respective wells of a 12-well plate, filled with 1 ml 15% LB-agar, supplemented with 0.5 g/l dextrose.

A pathogen strain - *Stenotrophomonas maltophilia* (Fig. 8A) or *Klebsiella pneumoniae* (Fig. 8B) - was grown in a liquid culture to a density of OD₆₀₀ = 0.4-0.7. Then, 5 µl of this suspension were transferred into each well of a second 12-well plate, filled with 1 ml 15% Caso-agar. Wells without adding the pyrazine compound were used as controls.

The two 12-well plates were clamped together with a perforated (3 holes per well) silicone foil in-between (silicone foil, 1 mm thick, holes having a diameter of 0.5 mm). Thereby, it is again important that the plates are in close proximity in order to allow the interaction of just one well with another. After a second incubation period of 48 hours the wells with Caso-agar were analyzed for spots showing growth inhibition. All wells without inhibition show milky nontransparent spots, which can be interpreted as growth of the pathogen, while wells with strong inhibition stay clear. Data shown are expressed as mean ± SEM of three independent experiments.

All three pyrazine concentrations analyzed resulted in a significant growth inhibition of *Stenotrophomonas maltophilia* (cf. Fig. 8A). In contrast, the growth of *Klebsiella pnaumoniae* was affected to a smaller extent. However, a concentration of 0.3 µl/cm³ pyrazine also resulted in an 50% growth inhibition as compared to the control (cf. Fig. 8B).

## Claims

1. Non-therapeutic method for controlling microbial growth on a surface to be treated, comprising:
(a) contacting the surface with one or more antimicrobial agents; and
(b) incubating the surface for a pre-selected period of time,
wherein the one or more antimicrobial agents are volatile organic compounds produced by plant-associated microorganisms selected from pyrazines, wherein the one or more pyrazines are selected from the group consisting of 2-methyl-5-(1-methylethyl)-pyrazine, 2,3,5-trimethyl-6-propyl-pyrazine, 2,3-dimethyl-6-propyl-pyrazine, 2,3-dimethyl-5-(1-methylpropyl)-pyrazine, 2,3-dimethyl-5-(2-methylpropyl)-pyrazine, and 2-(2-methylpropyl)-3-(1-methylethyl)-pyrazine.

2. The non-therapeutic method of claim 1, wherein the one or more pyrazines are selected from the group consisting of 2-methyl-5-(1-methylethyl)-pyrazine, 2,3-dimethyl-5-(2-methylpropyl)-pyrazine, and 2-(2-methylpropyl)-3-(1-methylethyl)-pyrazine.

3. The non-therapeutic method of claim 1 or 2, wherein the one or more pyrazines are selected from the group consisting of 2,3-dimethyl-5-(2-methylpropyl)-pyrazine, and 2-(2-methylpropyl)-3-(1-methylethyl)-pyrazine.

4. The non-therapeutic method of any one of claims 1 to 3, wherein the surface to be treated is not part of clean room equipment.

5. The non-therapeutic method of any one of claims 1 to 4, wherein the surface to be treated is located in a clinical setting.

6. The non-therapeutic method of any one of claims 1 to 5, wherein the method is for controlling microbial growth of one or more human pathogens.

7. The non-therapeutic method of claim 6, wherein the method is for controlling microbial growth of one or more multidrug-resistant human pathogens.

8. The non-therapeutic method of claim 6 or 7, wherein the one or more human pathogens cause nosocomial or community-acquired infections.

9. The non-therapeutic method of any one of claims 6 to 8, wherein the one or more human pathogens are selected from the group consisting of *Staphylococcus aureus, Staphylococcus epidermidis, Pseudomonas aeruginosa, Haemophilus influenzae, Stenotrophomonas maltophilia, Acinetobacter baumanii, Clostridium difficile, Mycobacterium tuberculosis,* and *Legionella pneumophila.*

## Patentansprüche

1. Nicht-therapeutisches Verfahren zur Kontrolle von mikrobiellem Wachstum auf einer zu behandelnden Oberfläche, umfassend:
(a) Inkontaktbringen der Oberfläche mit einem oder mehreren antimikrobiellen Mitteln, und
(b) Inkubieren der Oberfläche über einem vorgewählten Zeitraum,
wobei das eine oder die mehreren antimikrobiellen Mittel flüchtige organische Verbindungen sind, die von mit Pflanzen in Verbindung stehenden Mikroorganismen produziert werden, ausgewählt aus Pyrazinen, wobei das eine oder die mehreren Pyrazine aus der aus 2-Methyl-5-(1-methylethyl)-pyrazin, 2,3,5-Trimethyl-6-propyl-pyrazin, 2,3-Dimethyl-6-propyl-pyrazin, 2,3-Dimethyl-5-(1-methylpropyl)-pyrazin, 2,3-Dimethyl-5-(2-methylpropyl)-pyrazin und 2-(2-Methylpropyl)-3-(1-methylethyl)-pyrazin bestehenden Gruppe ausgewählt sind.

2. Nicht-therapeutisches Verfahren nach Anspruch 1, wobei das eine oder die mehreren Pyrazine aus der aus 2-Methyl-5-(1-methylethyl)-pyrazin, 2,3-Dimethyl-5-(2-methylpropyl)-pyrazin und 2-(2-Methylpropyl)-3-(1-methylethyl)-pyrazin bestehenden Gruppe ausgewählt sind.

3. Nicht-therapeutisches Verfahren nach Anspruch 1 oder 2, wobei das eine oder die mehreren Pyrazine aus der aus 2,3-Dimethyl-5-(2-methylpropyl)-pyrazin und 2-(2-Methylpropyl)-3-(1-methylethyl)-pyrazin bestehenden Gruppe ausgewählt sind.

4. Nicht-therapeutisches Verfahren nach einem der Ansprüche 1 bis 3, wobei die zu behandelnde Oberfläche kein Teil einer Reinraumausrüstung ist.

5. Nicht-therapeutisches Verfahren nach einem der Ansprüche 1 bis 4, wobei sich die zu behandelnde Oberfläche in einem klinischen Umfeld befindet.

6. Nicht-therapeutisches Verfahren nach einem der Ansprüche 1 bis 5, wobei das Verfahren zur Kontrolle von mikrobiellem Wachstum von einem oder mehreren Humanpathogenen ist.

7. Nicht-therapeutisches Verfahren nach Anspruch 6, wobei das Verfahren zur Kontrolle von mikrobiellem Wachstum von einem oder mehreren multiresistenten Humanpathogenen ist.

8. Nicht-therapeutisches Verfahren nach Anspruch 6 oder 7, wobei das eine oder die mehreren Humanpathogene nosokomiale oder ambulant erworbene Infektionen verursachen.

9. Nicht-therapeutisches Verfahren nach einem der Ansprüche 6 bis 8, wobei das eine oder die mehreren Humanpathogene aus der Gruppe, bestehend aus *Staphylococcus aureus, Staphylococcus epidermidis, Pseudomonas aeruginosa, Haemophilus influenzae, Stenotrophomonas maltophilia, Acinetobacter baumanii, Clostridium difficile, Mycobacterium tuberculosis* und *Legionella pneumophila,* ausgewählt sind.

## Revendications

1. Procédé non thérapeutique pour lutter contre la croissance microbienne sur une surface à traiter, comprenant :
(a) la mise en contact de la surface avec un ou plusieurs agents antimicrobiens ; et
(b) l'incubation de la surface pendant une durée prédéfinie,
dans lequel le ou les agents antimicrobiens sont des composés organiques volatils produits par des microorganismes associés à des plantes choisis parmi les pyrazines, dans lequel la ou les pyrazines sont choisies dans le groupe constitué de la 2-méthyl-5-(1-méthyléthyl)-pyrazine, de la 2,3,5-triméthyl-6-propyl-pyrazine, de la 2,3-diméthyl-6-propyl-pyrazine, de la 2,3-diméthyl-5-(1-méthylpropyl)-pyrazine, de la 2,3-diméthyl-5-(2-méthylpropyl)-pyrazine et de la 2-(2-méthylpropyl)-3-(1-méthyléthyl)-pyrazine.

2. Procédé non thérapeutique selon la revendication 1, dans lequel la ou les pyrazines sont choisies dans le groupe constitué de la 2-méthyl-5-(1-méthyléthyl)-pyrazine, de la 2,3-diméthyl-5-(2-méthylpropyl)-pyrazine et de la 2-(2-méthylpropyl)-3-(1-méthyléthyl)-pyrazine.

3. Procédé non thérapeutique selon la revendication 1 ou 2, dans lequel la ou les pyrazines sont choisies dans le groupe constitué de la 2,3-diméthyl-5-(2-méthylpropyl)-pyrazine et de la 2-(2-méthylpropyl)-3-(1-méthyléthyl)-pyrazine.

4. Procédé non thérapeutique selon l'une quelconque des revendications 1 à 3, dans lequel la surface à traiter ne fait pas partie d'un équipement de salle blanche.

5. Procédé non thérapeutique selon l'une quelconque des revendications 1 à 4, dans lequel la surface à traiter est située dans un milieu clinique.

6. Procédé non thérapeutique selon l'une quelconque des revendications 1 à 5, dans lequel le procédé est destiné à lutter contre la croissance microbienne d'un ou plusieurs pathogènes humains.

7. Procédé non thérapeutique selon la revendication 6, dans lequel le procédé est destiné à lutter contre la croissance microbienne d'un ou plusieurs pathogènes humains multirésistants.

8. Procédé non thérapeutique selon la revendication 6 ou 7, dans lequel le ou les pathogènes humains provoquent des infections nosocomiales ou extrahospitalières.

9. Procédé non thérapeutique selon l'une quelconque des revendications 6 à 8, dans lequel le ou les pathogènes humains sont choisis dans le groupe constitué de *Staphylococcus aureus, Staphylococcus epidermidis, Pseudomonas aeruginosa, Haemophilus influenzae, Stenotrophomonas maltophilia, Acinetobacter baumanii, Clostridium difficile, Mycobacterium tuberculosis* et *Legionella pneumophila.*
